# EUROPEAN PATENT SPECIFICATION

(11) **EP 1 605 567 B1**
(45) Date of publication and mention of the grant of the patent: **04.03.2009**
(21) Application number: 05380099.1
(22) Date of filing: 19.05.2005
(51) Int. Cl.: H02G 3/04

(54) **Anchoring part, compartmentation device of a support tray for electrical conductions and electrical conductions ducting system**
Verankerungsglied, Aufteiltungsvorrichtung eines elektrischen Kabel- und Rinnenkanalsystems
Dispositif d'accrochage, dipositif de compartimentage d'un système de chemin de câbles et de canalisations électriques

(30) Priority: 07.06.2004 ES 200401366 U
(43) Date of publication of application: 14.12.2005
(73) Proprietor: Unex Aparellaje Electrico S.L., 08903 L'Hospitalet de Llobregat (Barcelona) (ES)
(72) Inventor: Benito Navazo, Juan Manuel, 08290 Sant Cugat del Valles (Barcelona) (ES)
(74) Representative: Curell Aguilà, Marcelino

(56) References cited:
- US-A- 6 023 024

## Description

### Field of the invention

The present invention relates to an anchoring part, particularly a part for constituting a releasable attachment bond between the pierced bottom of a support tray for electrical conductions and a removable partition that allows the longitudinal compartmentation of the available space of the support tray, being said tray of the type that normally has functional holes along its bottom. The invention also relates to a compartmentation device of trays of this type including said anchoring part and said removable partition, and to a electrical conductions ducting system that includes a tray of this type and said anchoring part.

### State of the art

Ductings for electrical conductions having an available space that is comparted by longitudinal partitions which extend from the bottom of the ducting being a part thereof, are known.

Ductings of this type wherein their bottom have longitudinal ribs wherein it is possible to engage removable partitions are also known.

Both solutions, that are aimed at comparting the available space of the ducting in order to separate some ductings (telephony, informatics, etc.) from the others (lighting, power, voltage, etc.) in order that they cannot interfere with respect to one another, both in ordinary working conditions and in accidental cases, have drawbacks. In the first solution it is not possible to modify the arrangement of the partitions; in the second, the existence of longitudinal ribs that are not occupied by any partition makes difficult the arrangement of electrical conductions.

Document US6023024 (STJERNEBY et al.) discloses a cableway comprising a support tray constituted by a wire mesh, a removable longitudinal partition and retainers for securing the partition to the tray. The retainers comprise a recess for fastening to the transverse wires of the tray by snap action and two leg-shaped elements forming between themselves a guide for receiving the partition.

### Summary of the invention

With the aim of avoiding such drawbacks, and taking into account that the main part of trays carrying electrical conductions have in their bottom through holes, either round and/or slide, for different functions such as attaching the tray to a support bracket, passing the bundle attaching flanges of electrical conducts to the bottom of the tray, etc., it has been adopted the solution of attaching the removable partition at any point of the bottom of a tray allowed by the plurality of free functional holes, by interposing an attachable element in a releasable fashion between the tray and the compartmentation partition.

To this end, the invention relates to an anchoring part as defined in claim 1.

Preferably, said base plate has an oblong form having its higher dimension in said longitudinal direction defined by said guide.

Advantageously, said fixing means are oblong section protuberances having their larger dimension in said longitudinal direction defined by said guide, and preferably having said protuberances in their base an oblong protrusion having a complementary form of a slide hole.

Preferably, said base plate comprises, at its lower face, at least two of said guides arranged in each of the ends of said base plate and mutually aligned defining the same longitudinal direction and, preferably, said base plate further comprising, at its upper face, only one of said protuberances centrally arranged with respect to said two guides.

Advantageously, said base plate has in its contour hooks protruding from the upper face of said base plate and projecting over notches defined in said base plate.

Preferably, said protuberances have two elastic appendices extending in parallel with respect to one another from said oblong protrusion, being defined between said elastic appendices a separation space ending in an opening at the upper face of said base plate.

Preferably, said elastic appendices are flat and have at their free end, at the outer face a transversal chamfering and at the inner face a transversal roll.

The invention further relates to a longitudinal compartmentation device of a support tray for electrical conductions, comprising an anchoring part according to the invention and a compartmentation partition the lower edge of which has in section a complementary form of the form in section of said guide arranged in the base plate of the anchoring part, so that said lower edge is suitable for coupling in a guided fashion in said guide, being arranged said partition in the longitudinal direction defined by said guide.

Preferably, said guide has a tapered section and the lower edge of said partition has a clip form the section of which is complementary of said tapered section of the guide.

Advantageously, said compartmentation device according to the invention further comprises a rod having in section a complementary form of said opening wherein the separation space of said elastic appendices ends, so that said rod is suitable for coupling to said anchoring part by being introduced in said separation space.

Preferably, said rod has, in one end, a base head suitable for being arranged on the upper face of said base plate and, in the other end, transversal grooves coinciding with said transversal rolls of said elastic appendices when said rod is introduced in the separation space between said elastic appendices.

Finally, the invention further relates to an electrical conductions ducting system comprising an anchoring part according to the invention and a support tray for the ducting of electrical conductions that is provided in its bottom with oblong holes distributed along the longitudinal direction of said tray, having said holes their larger dimension in the longitudinal direction of said tray, so that when solidly joining the base plate of said anchoring part by introducing said protuberances in said holes, the longitudinal direction defined by said guide coincides with the longitudinal direction of said tray.

### Brief description of the drawings

To aid in understanding the preceding ideas, a preferred embodiment of the invention is described below, with reference to the accompanying illustrative drawings, in which:
Figure 1, shows, in perspective, an anchoring part according to the invention seen from its upper face.
Figure 2, also shows, in perspective, the anchoring part of the previous figure seen from its lower face.
Figure 3, shows, in longitudinal section, an exploded view of the anchoring part and the support tray to which it is aimed, wherein said tray is closed by a cover.
Figure 4, analogously to the previous figure, shows the laying of the anchoring part in the bottom of the tray.
Figure 5, shows, in cross-section at the centre of the anchoring part of figure 4, wherein there is no cover closing upwardly the tray and it has been included, in the previous position to its assembly, a removable partition for longitudinally comparting the tray.
Figure 6, shows, analogously to the case of the previous figure, the laying of a removable partition in the anchoring part, including the possibility of attaching to said anchoring part two bundles of electrical conductions.
Figure 7, shows, in perspective, a support tray for electrical conductions that, without its cover, shows the arrangement of a removable partition mounted in the anchoring part of the invention that is installed in the bottom of the tray.

### Detailed description of an embodiment of the invention

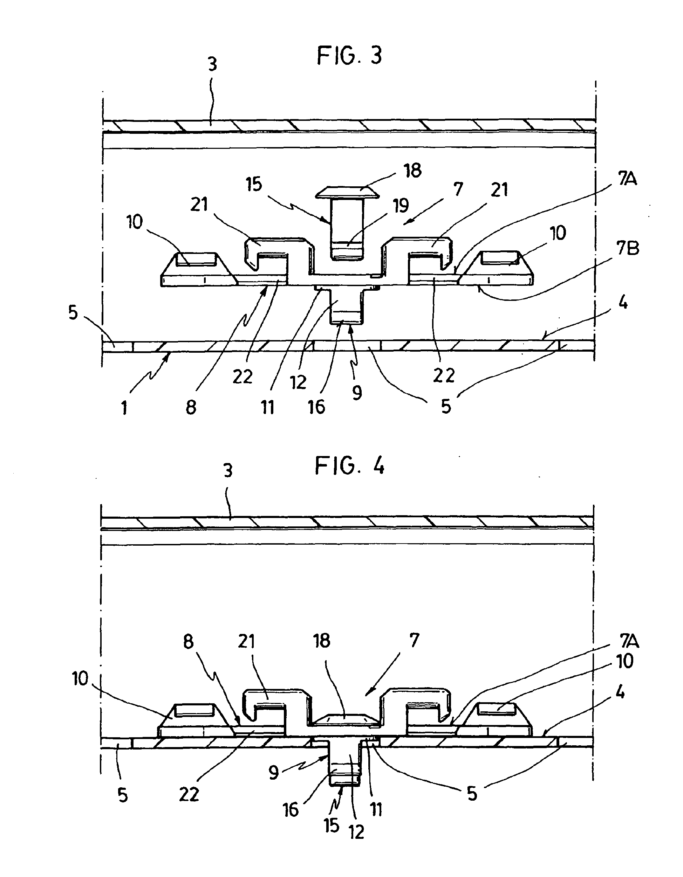

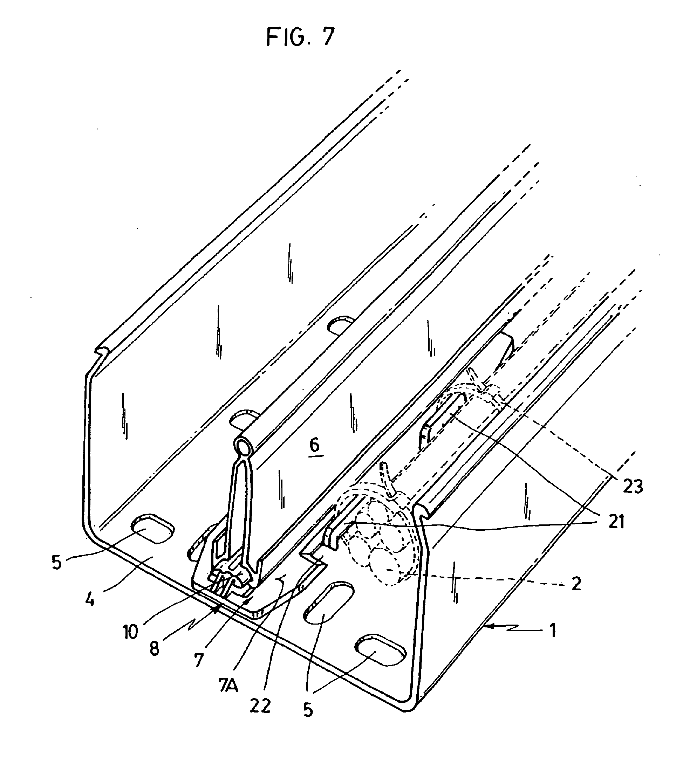

Figures 3 to 7 show a simple model of tray 1 for electrical conductions 2 that, in figures 3 and 4, has been represented with its cover profile 3, and in all them slide functional holes 5 are visible in its bottom 4, directed in longitudinal and transversal series.

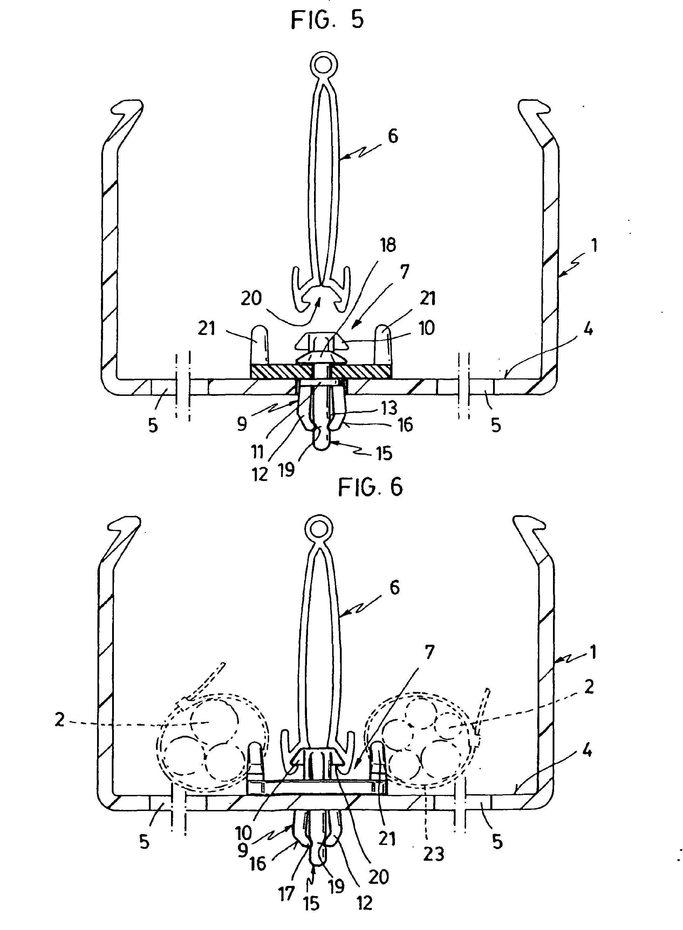

On the other hand, figures 5 to 7 show an embodiment of a removable partition 6 for longitudinally comparting tray 1 with the releasable attachment that the anchoring part 7 of the invention provides.

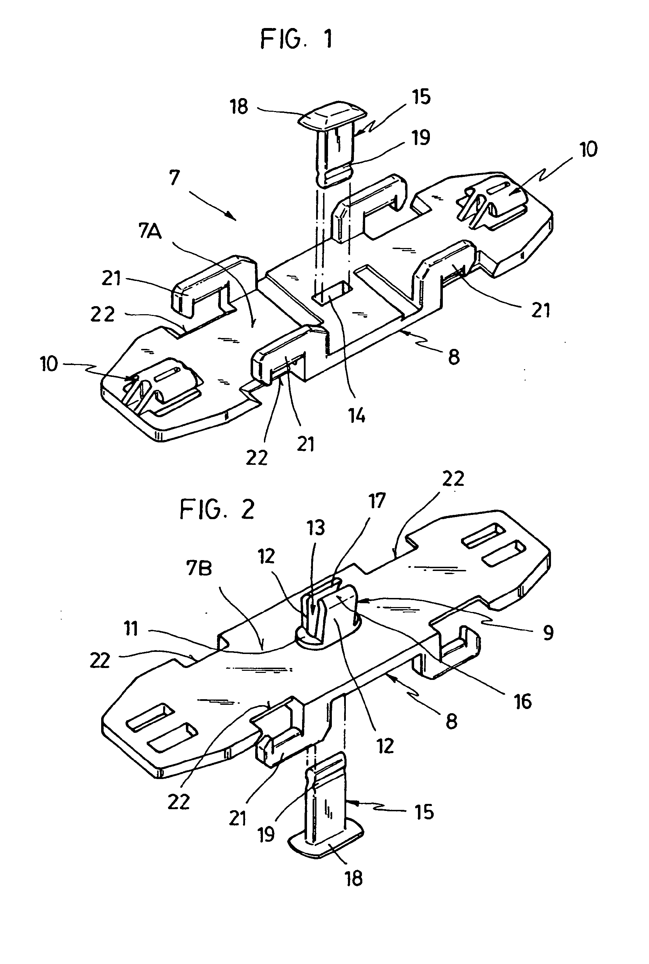

The referred anchoring part 7, as shown in figures 1 and 2, is constituted by a base plate 8, to be arranged on the bottom 4 of tray 1, that at its lower face 7B has protuberances 9 constituting releasable attachment means 9 to said bottom 4 through the functional slide holes 5 present in it, whilst having at its upper face 7A at least a guide 10, directed towards the longitudinal direction of tray 1, which has a straight section that is complementary of that of the lower edge of said removable partition 6.

As shown in figures 2, 3, 4 and 7, anchoring part 7 has the attachment means 9 to bottom 4 of tray 1 that, centrally arranged in its lower face 7B, have means orienting them towards the longitudinal direction of tray 1, means that in the represented case have an oblong protrusion 11 the contour of which is complementary of the slide holes 5, being only used to this purpose the ones longitudinally aligned to the axis of tray 1.

Protuberances 9, as particularly shown in figures 2 to 6, have two elastic appendices 12 that extend, mutually parallel, from said protrusion 11 and that define with respect to one another a mutual separation space 13 that ends in an opening 14 which opens in the upper face 7A of the anchoring part 7 and that is aimed at housing by pressure a separating rod 15 of said elastic appendices 12 that, elastically deformed are applied against the opposite sides of the contour of the slide hole 5 that they traverse, as shown in figure 5.

Said elastic appendices 12 are flat, as observed in figures 2 to 6, having, in the free end of their outer faces, a chamfering 16, and in the free end of their inner faces, a transversal roll 17.

With respect to the separating rod 15, as observed in figures 1 to 6, it has a rectangular straight section corresponding to the virtual straight section of the separation space 13 between both elastic appendices 12, having, in one end, a base head 18 and, in the other end, corresponding transversal grooves 19 coinciding with rolls 17 of said elastic appendices 12 in the attachment position of the group to the bottom 4 of the tray.

The base plate 8 of the anchoring part has in its upper face 7A, as it has been already described, at least a protuberance as a guide 10, oriented towards the longitudinal direction of tray 1, as observed in figures 3, 4 and 7. In the case shown in the figures, the base plate 8, which is oblong, has a protuberance as a guide 10 in each end, being said protuberances aligned in the longitudinal direction of tray 1.

A harpoon type structure is taken to configure the coupling between the protuberances as guides 10 and the lower edge 20 of removable partition 6. Protuberances as guides 10 have a tapered section and the lower edge 20 of the removable partition 6 is configured as a clip the section of which is complementary of said tapered section of the protuberances as guides 10.

Finally, the base plate 8 has in some points of its contour hooks 21 protruding from the upper face 7A and orthogonally projecting on a virtual perimetric area wherein there are arranged notches 22, that can be applied to secure the bundle of electrical conductions 2 by flanges 23.

## Claims

1. Anchoring part (7) suitable for constituting a releasable attachment bond between bottom (4) of a support tray (1) for electrical conductions and the base of a longitudinal compartmentation partition (6) of said tray (1), said anchoring part (7) comprising a base plate (8) that at its lower face (7B) has attachment means (9) suitable for solidly joining said base plate (8) to the bottom (4) of said tray (1), whilst at its upper face (7A) said base plate (8) has at least a guide (10) defining a longitudinal direction, said guide (10) being suitable for coupling to a corresponding profile of the lower edge (20) of said partition (6), **characterised in that** said base plate (8) has an oblong form having its larger dimension in said longitudinal direction defined by said guide (10), said attachment means (9) being suitable for solidly joining said base plate (8) to the bottom (4) of said tray (1) through holes of the bottom (4) of said tray (1).

2. Anchoring part (7) according to claim 1, **characterised in that** said fixing means (9) are oblong section protuberances having their higher dimension in said longitudinal direction defined by said guide (10).

3. Anchoring part (7) according to claim 2, **characterised in that** said protuberances (9) have in their base an oblong protrusion (11) having a complementary form of a slide hole.

4. Anchoring part (7) according to claim 3, **characterised in that** said base plate (8) comprises, at its lower face (7B), at least two of said guides (10) arranged in each of the ends of said base plate (8) and mutually aligned defining the same longitudinal direction.

5. Anchoring part (7) according to claim 4, **characterised in that** said base plate (8) comprises, at its upper face (7A), only one of said protuberances (9) centrally arranged with respect to said two guides (10).

6. Anchoring part (7) according to any of claims 1 to 5, **characterised in that** said base plate (8) has in its contour hooks (21) protruding from the upper face (7A) of said base plate (8) and projecting on notches (22) defined in said base plate (8).

7. Anchoring part (7) according to any of claims 2 to 6, **characterised in that** said protuberances (9) have two elastic appendices (12) extending in parallel with respect to one another from said oblong protrusion (11), being defined between said elastic appendices (12) a separation space (13) which ends in an opening (14) at the upper face (7A) of said base plate (8).

8. Anchoring part (7) according to claim 7, **characterised in that** said elastic appendices (12) are flat and have in their free end, in the outer face a transversal chamfering (16) and at the inner face a transversal roll (17).

9. Longitudinal compartmentation device for a support tray (1) for electrical conductions, comprising an anchoring part (7) according to any of claims 1 to 8 and a compartmentation partition (6) the lower edge (20) of which has in section a complementary form of the form in section of said guide (10) arranged in the base plate (8) of the anchoring part (7), so that said lower edge (20) is suitable for coupling in a guided fashion in said guide (10), being arranged said partition (6) in the longitudinal direction defined by said guide (10).

10. Longitudinal compartmentation device according to claim 9, **characterised in that** said guide (10) has a tapered section and the lower edge (20) of said partition (6) has a clip form the section of which is complementary of said tapered section of guide (10).

11. Longitudinal compartmentation device for a support tray (1) for electrical conductions, comprising an anchoring part (7) according to claims 7 or 8 and a rod (15) having in section a complementary form of said opening (14) wherein the separation space (13) of said elastic appendices (12) ends, so that said rod (15) is suitable for coupling to said anchoring part (7) by being introduced in said separation space (13).

12. Longitudinal compartmentation device according to claim 11, **characterised in that** said rod (15) has, in one end, a base head (18) suitable for being arranged on the upper face (7A) of said base plate and, in the other end, transversal grooves (19) coinciding with said transversal rolls (17) of said elastic appendices (12) when said rod is introduced in the separation space (13) between said elastic appendices (12).

13. Electrical conductions ducting system comprising an anchoring part (7) according to any of claims 2 to 8 and a support tray (1) for the ducting of electrical conductions that is provided in its bottom with oblong holes (5) distributed along the longitudinal direction of said tray (1), having said holes (5) their larger dimension in the longitudinal direction of said tray (1), so that when solidly joining the base plate (8) of said anchoring part (7) by introducing said protuberances (9) in said holes (5), the longitudinal direction defined by said guide (10) coincides with the longitudinal direction of said tray (1).

## Patentansprüche

1. Verankerungsglied (7) zur Bildung einer abnehmbaren Befestigungsverbindung zwischen einem Boden (4) eines Stütztroges (1) für elektrische Kabel und der Basis einer Längsunterteilungswand (6) des Troges (1), wobei das Verankerungsglied (7) eine Grundplatte (8) aufweist, die an ihrer unteren Fläche (7B) Befestigungsmittel (9) hat, die für ein festes Verbinden der Grundplatte (8) mit dem Boden (4) des Troges (1) geeignet ist, während die Grundplatte (8) an ihrer oberen Fläche (7A) mindestens eine Führung (10) zum Definieren einer Längsrichtung aufweist, wobei die Führung (10) für das Koppeln mit einem entsprechenden Profil des unteren Randes (20) der Unterteilung (6) ausgebildet ist,
**dadurch gekennzeichnet, dass**
die Grundplatte (8) eine längliche Form hat, bei der das größere Maß in der Längsrichtung durch die Führung (10) definiert wird, und dass die Befestigungsmittel (9) für das feste Verbinden der Grundplatte (8) mit dem Boden (4) des Troges (1) durch Öffnungen im Boden (4) des Troges (1) ausgebildet sind.

2. Verankerungsglied (7) nach Anspruch 1, **dadurch gekennzeichnet, dass** die Befestigungsmittel (9) längliche Abschnittserhebungen sind, deren größeres Maß in der durch die Führung (10) definierten Längsrichtung liegt.

3. Verankerungsglied (7) nach Anspruch 2, **dadurch gekennzeichnet, dass** die Erhebungen (9) an ihrer Basis einen länglichen Vorsprung (11) aufweisen, der zu der Form einer Gleitöffnung komplementär ausgebildet ist.

4. Verankerungsglied (7) nach Anspruch 3, **dadurch gekennzeichnet, dass** die Grundplatte (8) an ihrer unteren Fläche (7B) mindestens zwei der Führungen (10) aufweist, die an jedem der Enden der Grundplatte (8) angeordnet und zueinander in derselben Längsrichtung ausgerichtet sind.

5. Verankerungsglied (7) nach Anspruch 4, **dadurch gekennzeichnet, dass** die Grundplatte (8) an ihrer oberen Fläche (7A) nur eine der Erhebungen (9) aufweist, die gegenüber den beiden Führungen (10) mittig ausgerichtet ist.

6. Verankerungsglied (7) nach einem oder mehreren der Ansprüche 1 bis 5, **dadurch gekennzeichnet, dass** die Grundplatte (8) in ihrer Kontur Haken (21) aufweist, die von der oberen Fläche (7A) der Grundplatte (8) vorstehen und in Ausnehmungen (22) hineinreichen, die in der Grundplatte (8) gebildet sind.

7. Verankerungsglied (7) nach einem oder mehreren der Ansprüche 2 bis 6, **dadurch gekennzeichnet, dass** die Erhebungen (9) zwei elastische Ansätze (12) aufweisen, die sich parallel zueinander von dem länglichen Vorsprung (11) erstrecken und die zwischen sich einen Unterteilungsraum (13) definieren, der in einer Öffnung (14) der oberen Fläche (7A) der Grundplatte (8) endet.

8. Verankerungsglied (7) nach Anspruch 7, **dadurch gekennzeichnet, dass** die elastischen Ansätze (12) flach ausgebildet sind und an ihrem freien Ende in der Außenfläche eine transversale Abschrägung (16) und an der Innenfläche eine transversale Rundung (17) aufweisen.

9. Längliche Aufteilungsvorrichtung für einen Stütztrog (1) für elektrische Kabel mit einem Verankerungsglied (7) nach einem oder mehreren der Ansprüche 1 bis 8 und mit einer Unterteilungswand (6), deren unterer Rand (20) im Querschnitt eine komplementäre Form zu der Form der Führung (10) hat, die in der Grundplatte (8) des Verankerungsgliedes (7) derart angeordnet ist, dass der untere Rand (20) für das geführte Koppeln in der Führung (10) ausgebildet ist, und dass die Unterteilungswand (6) in der Längsrichtung angeordnet ist, die durch die Führung (10) definiert ist.

10. Längliche Aufteilungsvorrichtung nach Anspruch 9, **dadurch gekennzeichnet, dass** die Führung (10) einen verjüngten Abschnitt aufweist und der untere Rand (20) der Unterteilung (6) eine Clip-Form hat, deren Querschnitt komplementär zu dem verjüngten Abschnitt der Führung (10) ist.

11. Längliche Aufteilungsvorrichtung für einen Stütztrog (1) für elektrische Kabel mit einem Verankerungsglied (7) nach Anspruch 7 oder 8 und mit einem Stab (15), der im Querschnitt eine komplementäre Form zu der Öffnung (14) hat, wobei der Aufteilungsraum (13) der elastischen Ansätze (12) derart endet, dass der Stab (15) für das Koppeln mit dem Verankerungsglied (7) durch Einführen in den Aufteilungsraum (13) ausgebildet ist.

12. Längliche Aufteilungsvorrichtung nach Anspruch 11, **dadurch gekennzeichnet, dass** der Stab (15) an einem Ende einen Basiskopf (18) aufweist, der für das Anordnen auf der oberen Fläche (7A) der Grundplatte ausgebildet ist, und an dem anderen Ende transversale Einschnitte (19) hat, die mit den transversalen Rundungen (17) der elastischen Ansätze (12) zusammentreffen, wenn der Stab in den Aufteilungsraum (13) zwischen den elastischen Ansätze (12) eingesetzt wird.

13. Elektrisches Verkabelungs- und Kanalsystem mit einem Verankerungsglied (7) nach einem oder mehreren der Ansprüche 2 bis 8 und mit einem Stütztrog (1) für die elektrische Verkabelung, der an seinem Boden mit länglichen Öffnungen (5) versehen ist, die entlang der Längsrichtung des Troges (1) verteilt sind, wobei das größere Maß der Öffnungen (5) in Längsrichtung des Troges (1) liegt, so dass beim festen Verbinden der Grundplatte (8) des Verankerungsgliedes (7) durch Einführen der Erhebungen (9) in die Öffnungen (5) die durch die Führung (10) definierte Längsrichtung mit der Längsrichtung des Troges zusammenfällt.

## Revendications

1. Partie d'accrochage (7) appropriée pour constituer une liaison de fixation pouvant être libéré entre un fond (4) d'une goulotte (1) pour des câbles électriques et la base d'une cloison de compartimentation longitudinale (6) de ladite goulotte (1), ladite partie d'accrochage (7) comprenant une plaque de base (8) qui, à sa face inférieure (7B), a un moyen de fixation (9) approprié pour fixer solidement ladite plaque de base (8) au fond (4) de ladite goulotte (1), tandis qu'à sa face supérieure (7A), ladite plaque de base (8) a au moins un guide (10) définissant une direction longitudinale, ledit guide (10) étant approprié pour se coupler à un profil correspondant du bord inférieur (20) de ladite cloison (6), **caractérisée en ce que** ladite plaque base (8) a une forme oblongue ayant sa plus grande dimension dans ladite direction longitudinale définie par ledit guide (10), ledit moyen de fixation (9) étant approprié pour fixer solidement ladite plaque de base (8) au fond (4) de ladite goulotte (1) à travers des trous du fond (4) de ladite goulotte (1).

2. Partie d'accrochage (7) selon la revendication 1, **caractérisée en ce que** lesdits moyens de fixation sont des parties (9) faisant saillie de section oblongue ayant leur dimension la plus grande dans ladite direction longitudinale définie par ledit guide (10).

3. Partie d'accrochage (7) selon la revendication, **caractérisée en ce que** lesdites parties (9) faisant saillie ont dans leur base une partie faisant saillie oblongue (11) ayant une forme complémentaire d'un trou d'ajustement.

4. Partie d'accrochage (7) selon la revendication 3, **caractérisée en ce que** ladite plaque de base (8) comprend, sur sa face supérieure (7A), au moins deux desdits guides (10) disposés à chacune des extrémités de ladite plaque de base (8) et mutuellement alignés définissant la même direction longitudinale.

5. Partie d'accrochage (7) selon la revendication 4, **caractérisée en ce que** ladite plaque de base (8) comprend, sur sa face inférieure (7B), seulement une desdites parties (9) faisant saillie disposées centralement par rapport auxdits deux guides (10).

6. Partie d'accrochage (7) selon l'une quelconque des revendications 1 à 5, **caractérisée en ce que** ladite plaque de base (8) a, dans son contour, des crochets (21) faisant saillie à partir de la face supérieure (7A) de ladite plaque de base (8) et faisant saillie sur des entailles (22) définies dans ladite plaque de base (8).

7. Partie d'accrochage (7) selon l'une quelconque des revendications 2 à 6, **caractérisée en ce que** lesdites parties (9) faisant saillie ont deux appendices souples (12) s'étendant parallèlement l'un par rapport à l'autre à partir de ladite partie faisant saillie oblongue (11), étant défini entre lesdits appendices souples (12) un espace de séparation (13) qui se termine dans une ouverture (14) sur sa face supérieure (7A) de ladite plaque de base (8).

8. Partie d'accrochage (7) selon la revendication 7, **caractérisée en ce que** lesdits appendices souples (12) sont plats et ont dans leur extrémité libre, dans la face externe, un chanfrein transversal (16) et sur la face interne un rond transversal (17).

9. Dispositif de compartimentation longitudinal pour une goulotte (1) pour des câbles électriques, comprenant une partie d'accrochage (7) selon l'une quelconque des revendications 1 à 8 et une cloison de compartimentation (6) dont le bord inférieur (20) a en section une forme complémentaire de la forme en section dudit guide (10) disposé sur la plaque de base (8) de la partie d'accrochage (7), de sorte que ledit bord inférieur (20) est approprié pour le couplage d'une manière guidée dans ledit guide (10), ladite cloison (6) étant disposée dans la direction longitudinale définie par ledit guide (10).

10. Dispositif de compartimentation longitudinal selon la revendication 9, **caractérisé en ce que** ledit guide (10) a une section effilée et le bord inférieur (20) de ladite cloison (6) a une forme de clip dont la section est complémentaire à ladite section effilée du guide (10).

11. Dispositif de compartimentation longitudinal pour une goulotte (1) pour des câbles électriques, comprenant une partie d'accrochage (7) selon les revendications 7 ou 8 et une tige (15) ayant en section une forme complémentaire de ladite ouverture (14) dans laquelle l'espace de séparation (13) desdits appendices souples (12) se termine, de sorte que ladite tige (15) est appropriée pour un couplage à ladite partie d'accrochage (7) en étant introduite dans ledit espace de séparation (13).

12. Dispositif de compartimentation longitudinal selon la revendication 11, **caractérisé en ce que** ladite tige (15) a, dans une extrémité, une tête de base (18) appropriée pour être disposée sur la face supérieure (7A) de ladite plaque de base et, dans l'autre extrémité, des gorges transversales (19) coïncidant auxdits ronds transversaux (17) desdits appendices souples (12) lorsque ladite tige est introduite dans l'espace de séparation (13) entre lesdits appendices souples (12).

13. Système de goulotte pour câbles électriques comprenant une partie d'accrochage (7) selon l'une quelconque des revendications 2 à 8 et une goulotte (1) pour le chemin de câbles électriques qui est pourvue dans son fond de trous oblongs (5) distribués le long de la direction longitudinale de ladite goulotte (1), ayant lesdits trous (5) dans leur plus grande dimension dans la direction longitudinale de ladite goulotte (1), pour qu'au moment où on fixe solidement la plaque de base (8) de ladite partie d'accrochage (7) en introduisant lesdites parties (9) faisant saillie dans lesdits trous (5), la direction longitudinale définie par ledit guide (10) coïncide avec la direction longitudinale de ladite goulotte (1).
